# EUROPEAN PATENT SPECIFICATION

(11) **EP 1 355 475 B1**
(45) Date of publication and mention of the grant of the patent: **21.12.2005**
(21) Application number: 02008755.7
(22) Date of filing: 18.04.2002
(51) Int. Cl.: H04L 29/12, H04L 29/06, G06F 17/60, H04M 3/493, H04L 29/08, G06F 17/30

(54) **Enhancing of web pages with new functionality for web-based services**
Erweiterung von Webseiten um neue Funktionalität für Web-basierte Dienste
Amélioration d'une page Web avec nouvelles fonctionalités pour services sur le web

(43) Date of publication of application: 22.10.2003
(73) Proprietor: SIEMENS AKTIENGESELLSCHAFT, 80333 München (DE)
(72) Inventor: Pinal, Jean-Pierre, 22560 Trebeurden (FR)

(56) References cited:
- EP-A- 0 843 454
- WO-A-00/52902
- WO-A-01/06387
- WO-A-98/43178
- GB-A- 2 330 429
- US-A- 5 752 022
- US-B1- 6 185 194
- US-B1- 6 266 681
- US-B1- 6 341 128
- HOLLEVOET F: "THE ANY-MEDIA CALL CENTRE" , BRITISH TELECOMMUNICATIONS ENGINEERING, BRITISH TELECOMMUNICATIONS ENGINEERING. LONDON, GB, VOL. 17, NR. PART 2, PAGE(S) 155-159 XP000777437 ISSN: 0262-401X * the whole document *

## Description

The invention relates to a method and a proxy server for enhancing a Web page with new functionality or new content.

Web technologies provide a vast seed bed for the creation of new distributed applications. Nowadays, the Internet is routinely use to garner or retrieve information of various kinds. New services are created that put to use information culled form multiple sources.

There is a copious, ever expanding tool box for setting up distributed applications. Runtime environments such as J2EE (Java 2 Platform, Enterprise Edition) and Microsoft .NET, protocols or standards for distributed systems such as SOAP (Simple Object Access protocol), WSDL (Web Service Definition Language) and UDDI (Universal Description, Discovery, and Integration), and programming languages such as Java and C++ are commonly deployed for services relying on the client-server paradigm.

The World Wide Web, which is often referred to as "the Web", is a hypertext and hypermedia information system built on top of the Internet. Generally, Web clients and Web servers communicate via HTTP (hypertext transfer protocol) and exchange information that is formatted with HTML (Hypertext Markup Language) and XML (Extensible Markup Language). The exchanged information can be displayed via Web browsers. Such a system is disclosed, for example, in the prior-art document GB-A-2 330 429 (ZYR IS PLC). Below, information that is exchanged over the Web to be displayed by Web browsers is referred to as "Web pages" or "Web page".

The Web provides a distributed environment with a myriad of server-based locations of Web page information. Distributed applications can draw on this host of information to add value to Web-based services.

The present invention aims at improving the scope of Web-based services.

According to the present invention Web pages transmitted between a first server and a Web client are enhanced with new functionality or new content by a second server. This second server is intermediate with respect to the first server and the Web client in the sense that Web pages requested by the Web client are first transmitted to the second server and then from the second server to the Web client. Below the second server is referred to as "proxy server" and the attribute "first" is omitted in reference to the first server which provides the Web page. New functionality or new content is introduced into the Web page by the proxy server. The enhancement of the Web page may comprise the insertion of hyperlinks as well as service invocation features. To this end, the Web page is parsed and new lines of code are introduced into the Web page. For example, the Web page may be written in the HTML or an XML language. In this case, new functionality may be added by introducing lines of HTML code or XML code and JavaScript code.

The present invention allows for the creation of new services based on a wider range of information in the form of Web pages provided at remote locations. Web pages can be enhanced with new functionality during a time span sufficiently short for effecting the enhancement on the fly, i.e. in the intervening time period between sending the request and receiving the Web page. Thus, the present method is economical in the sense that only selected Web pages are enhanced with new functionality. In addition, the service provider that operates the proxy server can be different from the provider maintaining the Web page. This separation allows for flexibility in creating new services.

In the preferred embodiment the Web page is provided with functionality that allows for service invocation by clicking on text or icons. In this case, the invoked service may be the establishment of a telephone connection or the transmission of a fax.

A procedure for setting up a call via a graphical interface is disclosed, for example, in the prior-art document WO 01 06387.

The proxy server according to the invention may be a dedicated server or a multi-purpose server where the enhancement of Web pages goes along with other functions such as hosting Web pages. The present proxy server needs to be equipped with functional modules for parsing Web pages and for introducing new lines of code into Web pages. Means for supporting the communication between the proxy server and servers with Web pages may be provided in the form of a functional module that emulates a Web client, i.e. that functions as a Web client in the exchange of messages between the proxy server and other servers. Further possible functional modules are a module for caching Web pages, for handling sessions initiated by a subscriber to a service, and a module allowing for management of the proxy server via a remote host.

Below the invention is described by way of example and with reference to figures.
Fig. 1 shows a system for Web-based invocation of voice connections
Fig. 2 shows a diagram of an exchange of messages for Web-based invocation of voice connection
Fig. 3 shows functional modules of a proxy server according to the invention

In the preferred embodiment the invention is used to provide a Web-based service for telephony. According to this service calling information such as the B-party number is obtained by a Web client CPC via a HTTP request. Upon the Web client's request a Web page is transmitted to the Web client CPC and displayed by the Web client's browser. The transmitted Web page provides calling information to identify the B-party B-PTY and allows for direct invocation of a call set-up, e.g. by clicking on a displayed piece of information such as the B-party number or the name associated with this number. According to the present invention the Web page is enhanced with the functionality for direct invocation of a call set-up prior to transmission to the Web client CPC. By way of example URLs (Uniform Resource Identifiers) relating to telecommunication companys' online directory services are given:
1. http://www.infobel.com/france/wp/search/default.asp (France)
2. http://www.pagesjaunes.fr/wbpm pages blanches.cgi? (France)
3. http://www.teleauskunft.de/ (Germany)
4. http://www.infobel.com/UK/wp/search/default.asp (England)
5. http://www.infobel.com/USA/default.asp (USA & some European countries)
6. http://www.belcast.be/index2.html?redir=%2Fpage.html%3Fcha nnel%3Dsearch%26topic%3Dwhitepages%26content%3Ddefault%26p agelang%3Dfr (Belgacom)
7. http://www.pagesjaunes.fr/SITEPJI/en/ANUMONDE/home monde.h tml (world wide directories portal)

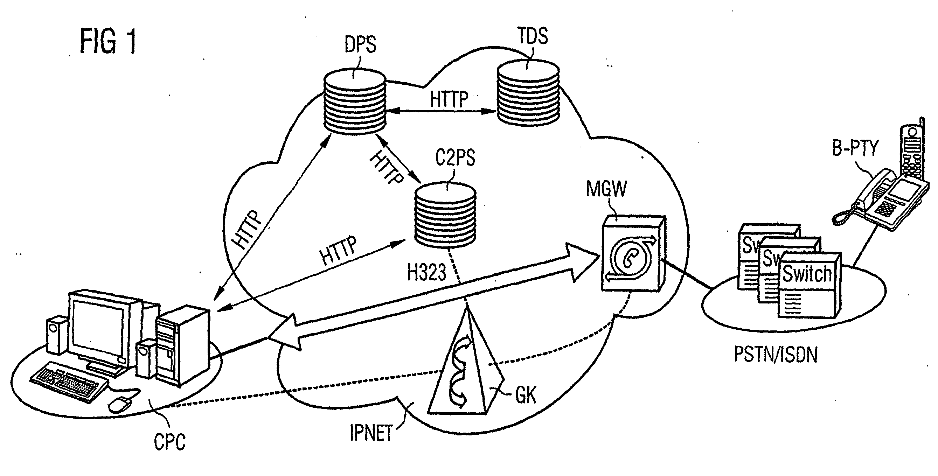

A scenario for this service where a Web page is supplied with new functionality by a proxy server DPS (DPS: stands for directory proxy server) is shown in figure 1. The Web client CPC may obtain calling information from an online telephone directory provided on a telecommunication company's directory server TDS. To this end, a HTTP request is sent to the telco's (telco: common for telecommunication company) directory server TDS. This request is either first transmitted to a directory proxy server DPS or intercepted by the directory proxy server DPS. The source address contained by the request is changed so that responses to the request are addressed to the directory proxy server DPS. After changing the source address the request for calling information is forwarded to the telco's directory server TDS. In response to the request a Web page with the requested calling information is provided by the telco's directory server TDS. The Web page is first transmitted to the directory proxy server DPS, where the Web page is parsed. New functionality is provided by inserting JavaScript and HTML text into the Web page. In particular, pieces of information on the Web page are enabled for service invocation, e.g. by clicking on a name or a calling number. In addition, a destination address of the response comprising the Web page is provided for transmission to the Web client CPC. Upon receiving the Web page the provided calling information is displayed on the Web client's GUI (Graphical User Interface). For example, this information comprises a list of names, B-party details, and associated calling numbers. Say, a user of the Web client specifies information related to a B-party in the request to the directory proxy server DPS in order to obtain the B-party's calling number. The telco's directory server TDS hosting the telephone directory service carries through a search for entries matching the query information, i.e. the information specified by the user. A Web page is transmitted in response to the request providing a list of all B-parties matching the originally specified information. Based on the additional details of the list the user identifies the B-party to be called and invokes a call set-up by clicking on the corresponding calling number displayed on his GUI. Below, details on the call set-up are given.

According to the scenario of figure 1 the B-party's terminal device B-PTY is a telephone connected to a PSTN (Public-Switched Telephone Network) network PSTN/ISDN. For example, the B-party's connection may be a digital ISDN (Integrated Services Digital Network) connection. The voice connection between the A-party and the B-party is mediated by a dedicated server, the click-to-phone server C2PS. The Web client CPC may be VoIP-enabled PC, i.e. a PC that can be used as terminal for a voice over Internet (VoIP) connection. Thus, it can be used as terminal device by the A-party, i.e. the user subscribing to the service. The directory proxy server DPS, the telco's directory server TDS, and the click-to-phone server C2PS form part of a packet-switched network IPNET. The Web client CPC is connected to this network IPNET, e.g. through a internet service provider. As transport protocol for the exchange of messages between the Web client and the servers as well as the inter-server communication the HTTP protocol is deployed. On the network level the IP (Internet Protocol) or the ATM (Asynchronous Transfer Mode) protocol may be used. The adaptation of voice messages transmitted from the packet-switched network IPNET to the PSTN network PSTN/ISDN and vice versa is assumed by a media gateway MGW. For call control and signalling a gatekeeper GK is deployed. Gatekeepers are often used in the context of transmission of voice over packet-switched networks by means of the H.323 protocol. Gatekeepers assume functions such as authentication, authorisation, accounting, call control and call routing, H.323 bandwidth usage etc. For these functions control messages may be exchanged between the gatekeeper GK and both the click-to-phone server C2PS and the media gateway MGW. As an alternative to a separate platform gatekeeper functions may be provided at the click-to-phone server C2PS.

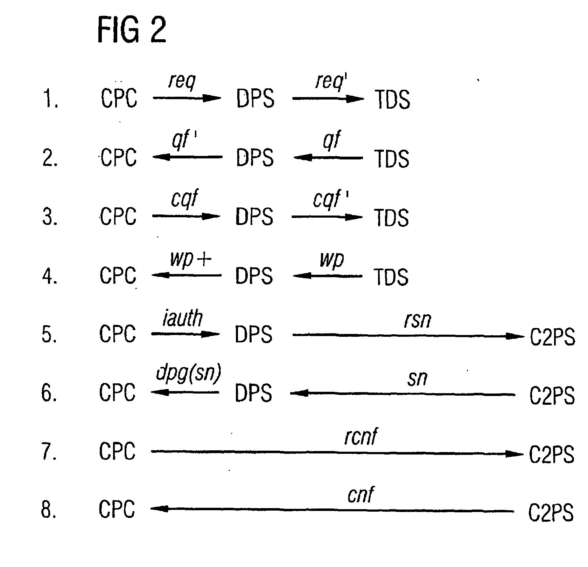

Essential steps for setting up a voice connection according to the invention are provided in more detail in figure 2.

Step 1: The Web client CPC connects to the packet-based network IPNET. A request req to obtain information from the telecommunication company's online directory service is launched by entering a URL at the Web client. The request req is transmitted to the directory proxy server DPS. The source address of the request is changed to represent the directory proxy server's as source. Within the HTTP protocol setting this change may translate into specifying a URL (Uniform Resource Locator) as source which refers to the directory proxy server DPS. Subsequently, the request req' is forwarded to the telco's directory server TDS where call-related information is made available. The prime of the reference sign req' reflects the changes effected upon the request by the directory proxy server DPS.

Step 2: The telco's directory server TDS responds by transmitting a query form qf, which is first sent to the directory proxy server DPS. Upon adjusting the address information referring to the destination the query form qf' (prime reflects change of destination address) is forwarded to the Web client CPC.

Step 3: At the Web client CPC B-party related information is entered so as to retrieve the B-party's calling number. This information cqf (completed query form) is transmitted to the online directory service at the telco's directory server TDS where the information is processed, i.e. a search for the B-party's details is performed.

Step 4: The result of the query is returned in the form of a Web page wp, which is first transmitted to the directory proxy server DPS. There the Web page wp is parsed. By inserting HTTP text and/or line of JavaScript into the Web page wp new functionality is added. In particular, a phone call can be invoked by clicking on a displayed item, such as a calling number. In case the A-party still needs to be authenticated additional JavaScript code is added so that authentication will be requested by the subscriber to the service upon clicking on a displayed item. In addition, the destination address is changed for forwarding the functionality-enhanced Web page to the Web client CPC. Upon receiving the functionality-enhanced Web page wp+ (the plus reflects the fact that new functionality has been added) the Web page wp+ is displayed on the Web client's GUI. The set-up of a phone call is invoked by clicking on a calling number displayed on the GUI.

In case an authentication has to be performed user name, password and the selected B-party number have to be provided for authentication before the call set-up can be launched. Such an authentication will be required if the user was not authenticated earlier, e.g. during a preceding user session. By carrying through authentication after reception of the Web page wp+ rather than at an earlier stage authentication is avoided in cases of early abortion. The authentication comprises step 5 and step 6.

Step 5: The authentication information iauth is transmitted to the telco's directory server TDS. Based on this authentication information iauth a session number sn is requested by the telco's directory server TDS at the Click-to-Phone server C2PS (rsn: request for session number).

Step 6: Upon receiving the session number sn the telco's directory server TDS provides the Web client CPC with a Web page "dial page" dpg(sn) including the session number sn. The dial page can be used for multiple purposes, e.g.
- Confirmation of the phone call by clicking on an item or an icon of the dial page dpg(sn)
- Saving the details of the B-party by clicking on an "add button"
- Automatically launching the request for the cnf file.

Step 7: A call request rcnf (rcnf: stands for request for cnf file) including the A-party number and the session number to is issued to the click-to-phone server C2CS. The call request rcnf is processed by the click-to-phone server C2CS.

Step 8: A cnf file cnf is returned by the click-to-phone server C2CS to the Web client CPC. The cnf file is a Microsoft NetMeeting configuration file, which comprises information for launching a Microsoft NetMeeting application. The Microsoft NetMeeting application initiates the call. The format of the cnf file is not HTML or XML but a text page of a special MIME (Multipurpose Internet Mail Extension) type.

Eventually, a connection for voice transmission is established between the Web client CPC, i.e. the A-party, and the B-party. Voice is exchanged via the media gateway MGW, which provides for the adjustment of voice data for transmission over different types of networks, i.e. packet-switched networks and TDM (time division multiplexing) networks.

Alternatively, the proxy server CPC and the click-to-phone server C2CS may be integrated on a single server platform. This integrated solution leads to a simplification with respect to the sequence of steps of figure 2, but is less flexible regarding the deployment of the integrated server platform. In particular, the separate servers solution has a better scalability.

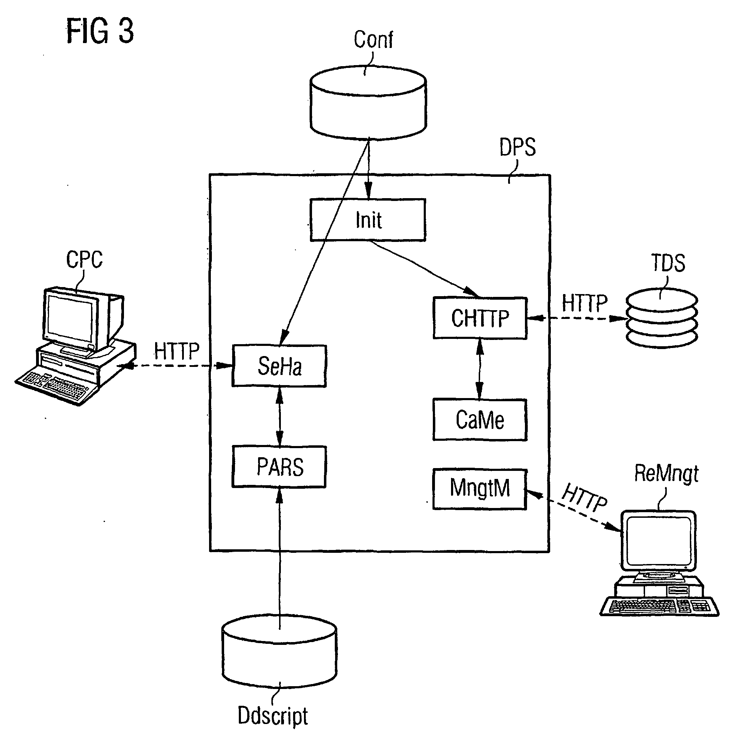

Figure 3 provides details of the deployed directory proxy server DPS. Following functional modules are shown:

Initiation module Init: The initiation module Init assumes initiatory functions. After running processes by the initiation module Init the directory proxy server is operational. In the initiation phase static configuration parameters are loaded from an external database Conf and permanent objects such as HTTP client objects and parser objects are instanced, i.e. copied.

HTTP client module CHTTP: Through the HTTP client module CHTTP the exchange of messages between the directory proxy server DPS and telecommunication companies' directory servers TDS is effected. For this exchange of messages the HTTP protocol is deployed.

The cache module CaMe: The cache module CaMe implements a cache mechanism. HTTP pages are cached to improve the performance.

Session handler module SeHa: User sessions or service subscriber sessions are handled via the session handler module SeHa. The user or service subscriber deploys a PC or another terminal device as Internet host. This Internet host functions as Web client CPC for invoking services or applications. For the communication between the Web client CPC and the directory proxy server the HTTP protocol is used.

HTML parser module PARS: The HTML parser module PARS parses the HTML code of Web pages in order to change links and to add functional features for the click-to-phone application. Directory description files are provided by an external database Ddscrpt. The directory description files store parameters relate to individual online directories. These parameters can include parsing rules, caching lists, code to be inserted in Web pages, etc. which are adapted to optimise the treatment of Web pages from the respective online directory.

The management module MngtM allows for changing dynamic configuration parameters by a remote manger ReMngt. The remote manager ReMngt effects changes through an external Web client's browser. For the communication the HTTP protocol is deployed.

Another embodiment is given by Web-based fax service invocation. Upon transmission of a Web page to the proxy server the Web page is parsed and code is added where fax numbers are found. The functionality-enhanced Web page is transmitted to the Web client that launched the original request. The Web client is located at an Internet terminal. A subscriber to the fax service can invoke the fax service by clicking on a fax number of the Web page, which is displayed on the Internet terminal. When he clicks on the fax number, a window is opened for browsing documents stored on the Internet terminal. The subscriber can choose a document and click on the OK" button to send it as a fax. The document is transmitted to a server where it is adjusted and formatted to be processed as a PSTN fax and to be transmitted over a PSTN network.

## Claims

1. A method for enhancing a Web page with additional functionality, comprising
a) sending a request by a client (CPC) for obtaining a Web Page which is provided by a server (TDS),
b) transmitting the Web page from the server (TDS) to a proxy server (DPS),
c) supplying the Web page with additional functionality by introducing new lines of code into the Web page, and
d) transmitting the Web page from the proxy server (DPS) to the client (CPC),
**characterised in that**
e) the Web page comprises calling information to identify a B-party (BPTY), and
f) the Web Page is enhanced with the functionality for a direct invocation of a call-set up to the B-party (BPTY).

2. The method according to claim 1, **characterised in that** the Web page is enhanced with service invocation functionality.

3. The method according to claim 2, **characterised in that** the Web page is enhanced with service functionality for invoking services by clicking on text or icons.

4. The method according to one of the claims 1 to 3, **characterised in that** the new lines of code introduced into the Web page comprise lines of HTTP code, XML code, or JavaScript code.

5. The method according to one of the claims 1 to 4, **characterised in that** The HTTP protocol is deployed for sending the request and for transmitting the Web page.

6. The method according to one of the claims 2 to 5, **characterised in that** the Web page is enhanced with service invocation functionality for invoking a telephone call or a fax transmission.

7. A proxy server (CPC) to be deployed for the method according to claim 1, comprising:
a) means for parsing Web pages, and
b) means for introducing new lines of code into Web pages.

8. The proxy server (CPC) according to claim 7, further comprising:
a) means for emulating a Web client, and
b) means for handling sessions initiated by a subscriber to a service.

9. The proxy server (CPC) according to claim 7 or 8, further comprising:
means for caching Web pages,

10. The proxy server (CPC) according to one of the claims 7 to 9, further comprising:
means providing for remote management of the proxy server via a Web client.

## Patentansprüche

1. Verfahren zur Erweiterung einer Webseite um zusätzliche Funktionalität, das Folgendes umfasst:
a) Senden eines Request durch einen Client (CPC), um eine Webseite anzufordern, die von einem Server (TDS) bereitgestellt wird,
b) Übertragen der Webseite von dem Server (TDS) an einen Proxy Server (DPS),
c) Ausstatten der Webseite mit zusätzlicher Funktionalität, indem neue Codezeilen in die Webseite eingefügt werden, und
d) Übertragen der Webseite von dem Proxy Server (DPS) an den Client (CPC),
**dadurch gekennzeichnet, dass**
e) die Webseite Verbindungsinformationen zur Identifizierung des B-Teilnehmers (BPTY) enthält, und
f) die Webseite erweitert wird um die Funktionalität zum direkten Veranlassen eines Verbindungsaufbaus zum B-Teilnehmer (BPTY).

2. Verfahren gemäß Anspruch 1, **dadurch gekennzeichnet, dass** die Webseite um eine Funktionalität zum Aufrufen von Diensten erweitert wird.

3. Verfahren gemäß Anspruch 2, **dadurch gekennzeichnet, dass** die Webseite um eine Dienstfunktionalität zum Aufrufen von Diensten durch Klicken mit der Maus auf Text oder Symbole erweitert wird.

4. Verfahren gemäß einem der Ansprüche 1 bis 3, **dadurch gekennzeichnet, dass**
die neuen Codezeilen, die in die Webseite eingefügt werden, Zeilen mit HTTP-Code, XML-Code oder JavaScript-Code umfassen.

5. Verfahren gemäß einem der Ansprüche 1 bis 4, **dadurch gekennzeichnet, dass**
für das Senden des Request und für das Übertragen der Webseite das HTTP-Protokoll verwendet wird.

6. Verfahren gemäß einem der Ansprüche 2 bis 5, **dadurch gekennzeichnet, dass** die Webseite um eine Funktionalität zum Aufrufen von Diensten erweitert wird, mit der eine Fernsprechverbindung oder die Übertragung einer Faxnachricht veranlasst werden kann.

7. Proxy Server (CPC), der für das Verfahren gemäß Anspruch 1 eingesetzt werden soll und Folgendes umfasst:
a) Mittel zum Analysieren von Webseiten (Parsing), und
b) Mittel zum Einfügen neuer Codezeilen in Webseiten;

8. Proxy Server (CPC) gemäß Anspruch 7, der ferner Folgendes umfasst:
a) Mittel zum Emulieren eines Web-Client, und
b) Mittel zum Abwickeln von Sitzungen, die von einem Teilnehmer eines Dienstes veranlasst werden.

9. Proxy Server (CPC) gemäß Anspruch 7 oder 8, der ferner Folgendes umfasst:
Mittel zum Zwischenspeichern (Caching) von Webseiten.

10. Proxy Server (CPC) gemäß einem der Ansprüche 7 bis 9, der ferner Folgendes umfasst:
Mittel zur Bereitstellung der Fernverwaltung des Proxy Servers über einen Web-Client.

## Revendications

1. Procédé d'amélioration d'une page Web par une fonctionnalité supplémentaire, comprenant :
a) envoyer une demande par un client (CPC) pour obtenir une Page Web qui est fournie par un serveur (TDS),
b) transmettre la page Web du serveur (TDS) à un serveur proxy (DPS),
c) pourvoir la page Web d'une fonctionnalité supplémentaire en introduisant de nouvelles lignes de code dans la page Web, et
d) transmettre la page Web du serveur proxy (DPS) au client (CPC),
**caractérisé en ce que**
e) la page Web comprend des informations d'appel pour identifier une partie B (BPTY), et
f) la page Web est améliorée avec la fonctionnalité pour un appel direct d'un établissement de communication vers la partie B (BPTY) .

2. Procédé selon la revendication 1, **caractérisé en ce que** la page Web est améliorée avec une fonctionnalité d'appel de service.

3. Procédé selon la revendication 2, **caractérisé en ce que** la page Web est améliorée avec une fonctionnalité de service pour appeler des services en cliquant sur un texte ou des icônes.

4. Procédé selon l'une des revendications 1 à 3, **caractérisé en ce que**
les nouvelles lignes de code introduites dans la page Web comprennent des lignes de code HTTP, de code XML ou de code JavaScript.

5. Procédé selon l'une des revendications 1 à 4, **caractérisé en ce que**
le protocole HTTP est déployé pour envoyer la demande et pour transmettre la page Web.

6. Procédé selon l'une des revendications 2 à 5, **caractérisé en ce que** la page Web est améliorée avec une fonctionnalité d'appel de service pour appeler un appel téléphonique ou une transmission de fax.

7. Serveur proxy (CPC) devant être déployé pour le procédé selon la revendication 1, comprenant :
a) un moyen pour analyser des pages Web, et
b) un moyen pour introduire de nouvelles lignes de code dans des pages Web.

8. Serveur proxy (CPC) selon la revendication 7, comprenant en outre :
a) un moyen pour émuler un client Web, et
b) un moyen pour traiter les sessions lancées par un abonné à un service.

9. Serveur proxy (CPC) selon la revendication 7 ou 8, comprenant en outre :
un moyen pour mettre des pages Web en antémémoire.

10. Serveur proxy (CPC) selon l'une des revendications 7 à 9, comprenant en outre :
un moyen assurant la gestion à distance du serveur proxy par l'intermédiaire d'un client Web.
